# EUROPÄISCHE PATENTANMELDUNG

(11) **EP 4 290 222 A1**
(43) Veröffentlichungstag der Anmeldung: **13.12.2023**
(21) Anmeldenummer: 22178297.2
(22) Anmeldetag: 10.06.2022
(51) Int. Cl.: G01N 21/65

(54) **VERFAHREN UND SENSORANORDNUNG SOWIE SYSTEM ZUR RAMAN-SPEKTROSKOPIE**

(71) Anmelder: Universität Stuttgart, 70174 Stuttgart (DE)
(72) Erfinder: HOPPE, Niklas, 70550 Stuttgart (DE); TRITSCHLER, Patrick Georg, 70550 Stuttgart (DE); SCHWEIKERT, Christian, 70550 Stuttgart (DE); BERROTH, Manfred, 70550 Stuttart (DE)
(74) Vertreter: PATERIS Patentanwälte PartmbB

(57) **Zusammenfassung**

Die Erfindung betrifft ein Verfahren zur Durchführung einer Raman-Spektroskopie, mit einer Sensoranordnung (4) zur Raman-Spektroskopie, insbesondere mit einer MEMS-Sensoranordnung zur Raman-Spektroskopie, wobei die Sensoranordnung (4) zur Raman-Spektroskopie einen Probeaufnahmeraum (6) zum Aufnehmen einer zu untersuchenden Probe (2), einen zumindest abschnittsweise an den Probeaufnahmeraum (6) angrenzenden Anregungssignalwellenleiter (8) zum Beaufschlagen der Probe (2) mit einem Anregungssignal, und zumindest zwei Spiegel-Elektroden (10a, 10b, 10c, 10d), aufweist, mit den Schritten:
(S100) Einbringen der Probe (2) in den Probenaufnahmeraum (6),
(S300) Einkoppeln von einem Anregungssignal an einer Einkoppelposition (I) in den Anregungswellenleiterkern (8), wobei durch das eingekoppelte Anregungssignal hervorgerufenes Raman-Streulicht auf seinem Weg zu dem Anregungssignalwellenleiter (8) zu einer Auskoppelposition (II) an den Spiegel-Elektroden (10a, 10b, 10c, 10d) reflektiert und in den Anregungswellenleiter (8) wieder eingekoppelt wird, und
(S400) Auskoppeln des Raman-Streulichts an der Auskoppelposition (II).

## Beschreibung

Die Erfindung betrifft ein Verfahren und eine Sensoranordnung sowie ein System zur Raman-Spektroskopie.

Die Raman-Spektroskopie ist eine weitverbreitete Anwendung zur Analyse von molekularen Zusammensetzungen in Stoffproben, z.B. in der Medizintechnik, Farbstoffanalyse, bei der Identifikation von chemischen Stoffen oder organischen Partikeln. Ein aktuelles Beispiel stellt die Detektion und Identifikation von Viren in Proben dar.

Bei der Raman-Spektroskopie wird die zu untersuchende Probe mit z.B. monochromatischem Licht als Anregungssignal bestrahlt, üblicherweise aus einem Laser. Im Spektrum des an der Probe gestreuten Lichts werden neben der eingestrahlten Frequenz (Rayleigh-Streuung) noch weitere Frequenzen beobachtet. Die Frequenzunterschiede zum eingestrahlten Licht entsprechen den für das Material charakteristischen Energien von Rotations-, Schwingungs-, Phonon- oder Spin-Flip-Prozessen. Aus dem erhaltenen Spektrum lassen sich, ähnlich dem Spektrum der Infrarotspektroskopie, Rückschlüsse auf die Zusammensetzung der untersuchten Probe ziehen.

Aus der US 2020 / 0 003 619 A1 ist eine Sensoranordnung zur Raman-Spektroskopie bekannt, die auf einem Halbleitersubstrat als chipintegriertes, miniaturisiertes Raman-Spektroskopie-System (Lab-on-a-chip) ausgebildet ist.

Allerdings ist der "Fingerabdruck" der Probe im Ausgangssignal bzw. Raman-Streulichtsignal relativ zu einem Anregungssignal sehr schwach, wodurch die Anforderungen einer rauscharmen Detektion sowie an ein Filtersystem hoch und damit kostspielig sind. Außerdem können Störsignale aufgrund von Fluoreszenzeffekten auftreten.

Es besteht also Bedarf daran, Wege aufzuzeigen, wie hier Verbesserungen erreicht werden können.

Die Aufgabe der Erfindung wird gelöst durch ein Verfahren zur Durchführung einer Raman-Spektroskopie, mit einer Sensoranordnung zur Raman-Spektroskopie, insbesondere mit einer MEMS-Sensoranordnung zur Raman-Spektroskopie, wobei die Sensoranordnung zur Raman-Spektroskopie einen Probeaufnahmeraum zum Aufnehmen einer zu untersuchenden Probe, einen zumindest abschnittsweise an den Probeaufnahmeraum angrenzenden Anregungssignalwellenleiter zum Beaufschlagen der Probe mit einem Anregungssignal, und zumindest zwei Spiegel-Elektroden aufweist, mit den Schritten:
Einbringen der Probe in den Probenaufnahmeraum,
Einkoppeln von einem Anregungssignal an einer Einkoppelposition in den Anregungswellenleiter, wobei durch das eingekoppelte Anregungssignal hervorgerufene Raman-Streulicht auf seinem Weg zu dem Anregungssignalwellenleiter zu einer Auskoppelposition an den Spiegel-Elektroden reflektiert und in den Anregungswellenleiter wieder eingekoppelt wird, und
Auskoppeln des Raman-Streulichts als Ausgangssignal an der Auskoppelposition.

Die Sensoranordnung zur Raman-Spektroskopie weist also als Komponenten zumindest einen Probeaufnahmeraum zum Aufnehmen einer zu untersuchenden Probe, einen zumindest abschnittsweise an den Probeaufnahmeraum angrenzenden Anregungssignalwellenleiter zum Beaufschlagen der Probe mit einem Anregungssignal, und zumindest zwei Spiegel-Elektroden auf.

Dabei wird unter einer MEMS-Sensoranordnung eine Baugruppe oder ein Bauteil verstanden, dessen Komponenten kleinste Abmessungen im Bereich von 1 Mikrometer haben und als System zusammenwirken. Ein derartiges Mikrosystem weist verschiedene Komponenten für verschiedene Aufgaben und/oder Funktionen auf einem Substrat bzw. Chip auf. Bei dem Substrat kann es sich um einen Silizium-Wafer handeln, auf dem die Komponenten des Mikrosystems mit z.B. CMOS-kompatiblen Fertigungstechnologien hergestellt werden.

Dadurch, dass die Sensoranordnung eine MEMS-Sensoranordnung ist, kann die MEMS-Sensoranordnung nach ihrem bestimmungsgemäßen Gebrauch mit Druckluft gereinigt werden, wie MEMS-Baugruppen oder andere Halbleiter-Baugruppen während ihrer Fertigung, insbesondere in Reinräumen.

Durch die Spiegelwirkung der Spiegel-Elektroden wird außerdem ein größerer Anteil des erzeugten Raman-Streulichts in den Anregungswellenleiter zurückgekoppelt.

Gemäß einer Ausführungsform wird die Probe mit einem elektrischen Feld zur Ausrichtung von Dipolen der Probe beaufschlagt. Aufgrund des elektrischen Feldes des geführten Anregungssignals innerhalb der Probe werden die Molekülbindungen in der Probe zum Schwingen angeregt. Diese angeregten Schwingungsmodi der Moleküle führen zur Emission von Photonen geringerer oder höherer Energie. Koppeln sie wieder in die wellenleitergeführten Modi ein, treten Signale im Ausgangsspektrum hervor, deren Wellenlängen sich von der Anregungswellenlänge unterscheiden. Diese induzierten Wellenlängen enthalten einen charakteristischen "Fingerabdruck" der Probe, was für hochselektive Methoden zur Materialanalyse sehr wertvoll ist. Ein Grund dafür, dass der "Fingerabdruck" (das Raman-Streulicht) der Probe im Gesamt-Ausgangssignal relativ zu einem Anregungssignal schwach ist, ist die statistisch geringe Wahrscheinlichkeit der Anregung eines Raman-Photons (ca. 1:1.000.000) aufgrund einer zufälligen Ausrichtung der Moleküle der Probe. Die Moleküle der Probe können in erster Näherung als Hertzsche Dipole aufgefasst werden. Es werden nur elektrische Feldanteile empfangen bzw. abgestrahlt, die parallel zum elektrischen Dipolmoment stehen. Somit werden die Schwingungsmodi der Moleküle, abhängig von deren Ausrichtung zum elektrischen Feld des Anregungssignals, stärker oder weniger stark angeregt. Durch spannungsgespeiste Spiegel-Elektroden kann ein externes elektrisches Feld in die Sensorregion des Probeaufnahmeraumes eingeprägt werden. Dieses ist dabei ausreichend stark, sodass die Dipole entlang des elektrischen Feldes ausgerichtet werden. Durch die erzwungene Ausrichtung erhöht sich sowohl die Wahrscheinlichkeit der Anregung der Schwingungsmodi als auch die Kopplung der emittierten Raman-Photonen in die geführten Modi des Anregungssignalwellenleiters. So kann eine deutliche Verstärkung des "Fingerabdrucks" im Ausgangssignal erreicht werden.

Gemäß einer weiteren Ausführungsform wird das elektrische Feld mit einer im Wesentlichen gleichspannungsfreien elektrischen Wechselspannung erzeugt. Dabei wird unter einer im Wesentlichen gleichspannungsfreien elektrischen Wechselspannung eine innerhalb technischer Grenzen gleichspannungsfreie elektrische Wechselspannung verstanden. Mit anderen Worten, es wird eine gleichwertfreie Wechselspannung verwendet. Dadurch bleiben die Position und die gewünschte Ausrichtung der Moleküle der Probe erhalten.

Gemäß einer weiteren Ausführungsform wird ein Anregungssignalwellenleiter verwendet, der Siliziumnitrid und/oder ein High-k-Dielektrikum und/oder Indiumzinnoxid und/oder Lithiumniobat enthält. Unter einem High-k-Dielektrikum wird dabei ein Material verstanden, das eine höhere Dielektrizitätszahl εᵣ als Siliziumdioxid (SiO₂) oder Siliziumnitrid (Si₃N₄) aufweist. Z.B. kann das High-k-Dielektrikum Aluminiumoxid (Al₃O₂) und/oder Tantaloxid (Ta₂O₅) und/oder andere amorphe Oxide von Metallen und/oder Titanoxid (TiO₂) und/oder Aluminiumnitrid (AIN) sein. So können eine besonders hohe Reflexion und besonders hohe elektrische Feldstärken erreicht werden. Unter Indiumzinnoxid (ITO) wird ein halbleitender, im sichtbaren Licht weitgehend transparenter Stoff verstanden. Es handelt sich um ein Mischoxid, üblicherweise aus 90 % Indium(III)-oxid (In₂O₃) und 10 % Zinn(IV)-oxid (SnO₂). Lithiumniobat (LiNbO₃) ist ebenfalls ein transparenter Stoff. Mit einem Anregungswellenleiter aus Indiumzinnoxid kann dieser aufgrund seiner elektrischen Leitfähigkeit auch als Spiegel-Elektroden zum Beaufschlagen der Probe mit einem elektrischen Feld verwendet werden. Somit entfallen zusätzlich hergestellte Spiegel-Elektroden.

Lithiumniobat hingegen erlaubt eine Integration weiterer, monolithisch integrierter optischer Komponenten, wie z.B. Modulatoren.

Gemäß einer weiteren Ausführungsform wird an der Einkoppelposition ein Gitterkoppler zum Einkoppeln und/oder an der Auskoppelposition ein Gitterkoppler zum Auskoppeln verwendet. Bei einer Einkopplung von dem Anregungssignal über eine Freiluftstrecke ist ein Gitterkoppler an der Einkoppelposition z.B. dazu ausgebildet, ein näherungsweise gaußglockenförmiges Strahlprofil eines Lichtwellenleiters, wie das einer Glasfaser, mit einem runden Durchmesser in das Modenprofil eines z.B. rechteckförmigen Querschnitts zu überführen. Hierzu kann im einfachsten Fall der Gitterkoppler eine periodische Gitterstruktur aufweisen, die das Anregungssignal zunächst in die horizontale Wellenleiterebene beugt. Es kann aber auch ein Gitterkoppler mit einer nichtperiodischen Gitterstruktur verwendet werden. Stege und Gräben des Gitterkopplers können auch gekrümmt ausgeführt sein, sodass die gebeugte Wellenfront auf einen Fokuspunkt zuläuft. Auf die Gitterstruktur folgt dann ein sich verjüngender Abschnitt, der sich zu dem Anregungssignalwellenleiter hin entsprechend verjüngt.

Gemäß einer weiteren Ausführungsform wird an der Ausgangsposition das Ausgangssignal mit einer Photodioden-Baugruppe der Sensoranordnung erfasst. Die Photodioden-Baugruppe kann PIN-Dioden oder Avalanche-Dioden aufweisen. Die Photodioden-Baugruppe kann monolithisch mit den anderen Komponenten integriert sein. Z.B. kann die Photodioden-Baugruppe während, d.h. zusammen, mit den anderen Komponenten gebildet werden, oder die Photodioden-Baugruppe wird vor oder nach dem Bilden der anderen Komponenten gebildet. So entfallen Signalverluste an einer Koppelstelle, z.B. zu einem Lichtwellenleiter. Breitbandige, monolithisch integrierte Photodioden erlauben bei einer gleichzeitigen hochfrequenten Anregung des Raman-Streulichts (Lock-in-Verfahren) Raman-Effekte von Fluoreszenzeffekten zu unterscheiden.

Gemäß einer weiteren Ausführungsform reflektiert ein Spiegelelement zusammenwirkend mit dem Anregungssignalwellenleiter das Raman-Streulicht auf seinem Weg zu einer Auskoppelposition
und/oder das Anregungssignal auf seinem Weg von einer Einkoppelposition zum Anregungssignalwellenleiter. Das Spiegelelement kann aus Aluminium bestehen, Aluminium enthalten, oder auch ein anderes, insbesondere CMOSkompatibles Metall enthalten. Alternativ kann das Spiegelelement auch aus nicht-metallischen Materialien gefertigt sein und z.B. als Bragg-Spiegel ausgebildet sein. Hierzu kann das Spiegelelement z.B. mehrere Schichten von Siliziumnitrid und Siliziumdioxid aufweisen, die in einer alternierenden Reihenfolge aufeinander gestapelt sind. Das Spiegelelement kann eine Kavität bedecken, die durch anisotropes Ätzen, insbesondere durch nasschemisches Ätzen mit Kaliumhydroxid (KOH) gebildet wurde. Durch die Kavität wird eine dünne Membran gebildet, die dann mit Aluminium beschichtet wird. In diesem Fall ist das Spiegelelement als Rückseiten-Spiegelelement ausgebildet.

Zusätzlich oder alternativ kann das Spiegelelement auch als Vorderseiten-Spiegelelement ausgebildet sein. Durch ein derartiges Spiegelelement werden z.B. Einkoppelverluste des Gitterkopplers an der Einkoppelposition deutlich verringert. Durch die Reflexion an dem Spiegelelement kann eine weitere Verstärkung des "Fingerabdrucks" im Gesamt-Ausgangssignal erreicht werden.

Gemäß einer weiteren Ausführungsform wird das Spiegelelement als Spiegel-Elektrode verwendet. So kann die elektrische Ausrichtung der Moleküle in mehrere Raumrichtungen erfolgen und das Ramansignal wird durch die Spiegelwirkung für das Raman-Streulicht nochmals gesteigert.

Ferner gehören zur Erfindung eine Sensoranordnung und ein System zur Raman-Spektroskopie mit einer derartigen Sensoranordnung.

Es wird nun die Erfindung anhand der Figuren erläutert. Es zeigen:
- Figur 1: in schematischer Darstellung eine Sensoranordnung zur Raman-Spektroskopie.
- Figur 2: in schematischer Darstellung ein System zur Raman-Spektroskopie mit der in Figur 1 gezeigten Sensoranordnung.
- Figur 3: einen ersten Verfahrensschritt eines ersten Herstellungsverfahrens.
- Figur 4: in schematischer Darstellung einen weiteren Verfahrensschritt des ersten Herstellungsverfahrens.
- Figur 5: in schematischer Darstellung einen weiteren Verfahrensschritt des ersten Herstellungsverfahrens.
- Figur 6: in schematischer Darstellung einen weiteren Verfahrensschritt des ersten Herstellungsverfahrens.
- Figur 7: in schematischer Darstellung einen weiteren Verfahrensschritt des ersten Herstellungsverfahrens.
- Figur 8: in schematischer Darstellung einen Schnitt entlang der Linie A - A in Figur 7.
- Figur 9: in schematischer Darstellung einen weiteren Verfahrensschritt des ersten Herstellungsverfahrens.
- Figur 10: in schematischer Darstellung einen ersten Verfahrensschritt eines zweiten Herstellungsverfahrens.
- Figur 11: in schematischer Darstellung einen weiteren Verfahrensschritt des zweiten Herstellungsverfahrens.
- Figur 12: in schematischer Darstellung einen weiteren Verfahrensschritt des zweiten Herstellungsverfahrens.
- Figur 13: in schematischer Darstellung einen weiteren Verfahrensschritt des zweiten Herstellungsverfahrens.
- Figur 14: in schematischer Darstellung einen weiteren Verfahrensschritt des zweiten Herstellungsverfahrens.
- Figur 15: in schematischer Darstellung einen weiteren Verfahrensschritt des zweiten Herstellungsverfahrens.
- Figur 16: in schematischer Darstellung einen Schnitt entlang der Linie B - B in Figur 15.
- Figur 17: in schematischer Darstellung eine weitere Variante eines Herstellungsverfahrens mit einem obenseitigen Spiegelelement.
- Figur 18: in schematischer Darstellung eine weitere Variante eines Herstellungsverfahrens mit einem kernfrei ausgebildeten Anregungswellenleiter.
- Figur 19: in schematischer Darstellung eine weitere Variante eines Herstellungsverfahrens mit einer Photodioden-Baugruppe.
- Figur 20: in schematischer Darstellung einen Querschnitt einer weitere Variante eines Herstellungsverfahrens mit einem Polarisationsrotator.
- Figur 21: in schematischer Darstellung eine Draufsicht korrespondierend zu der Figur 20.
- Figur 22: in schematischer Darstellung einen weiteren Querschnitt der in Figur 20 gezeigten weiteren Variante.
- Figur 23: in schematischer Darstellung eine weitere Schnittdarstellung korrespondierend zu der Figur 22.
- Figur 24: in schematischer Darstellung einen Verfahrensablauf zum Betrieb der in Figur 1 gezeigten Sensoranordnung bzw. des in Figur 2 gezeigten Systems.

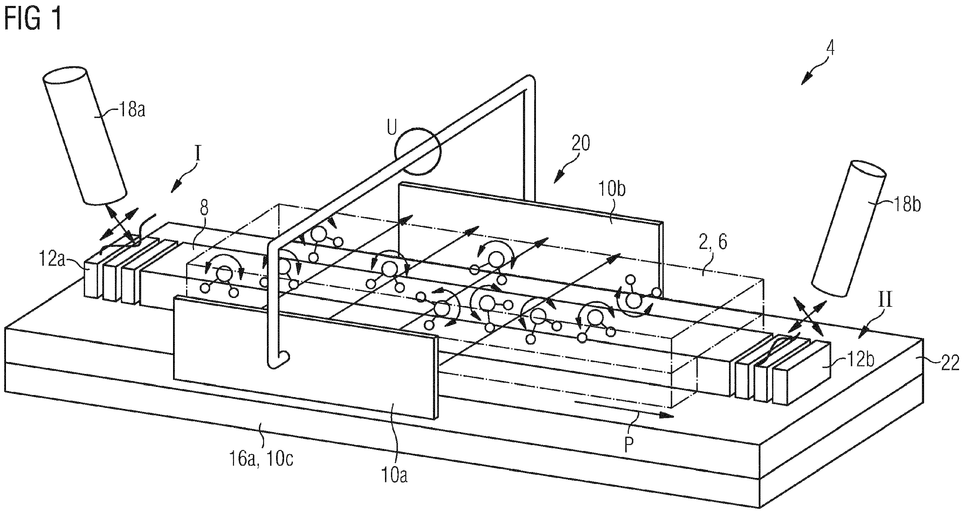

Es wird zunächst auf die Figur 1 Bezug genommen.

Dargestellt ist eine Sensoranordnung 4 zur Raman-Spektroskopie, die im vorliegenden Ausführungsbeispiel als MEMS-Sensoranordnung ausgebildet ist.

Im vorliegenden Ausführungsbeispiel weist die Sensoranordnung 4 zur Raman-Spektroskopie einen Probeaufnahmeraum 6 zur Aufnahme einer zu untersuchenden Probe 2, einen an den Probeaufnahmeraum 6 angrenzenden Anregungssignalwellenleiter 8 zum Beaufschlagen der Probe 2 mit einem Anregungssignal, und zwei Spiegel-Elektroden 10a, 10b zum Beaufschlagen der Probe 2 mit einem elektrischen Feld auf. Wie später noch erläutert wird, dienen die beiden Spiegel-Elektroden 10a, 10b als Elektroden und auch als Spiegel um Raman-Streulicht zu reflektieren und in den Anregungswellenleiter 8 wieder einzukoppeln. Weitere, dargestellte Komponenten der Sensoranordnung 4 sind zwei Gitterkoppler 12a, 12b und ein Spiegelelement 16a.

Der Anregungssignalwellenleiter 8 definiert einen Pfad P für das eingekoppelte Anregungssignal hin zu dem zweiten Gitterkoppler 12b an einer Auskoppelposition II.

Abweichend vom vorliegenden Ausführungsbeispiel kann auch vorgesehen sein, dass das eingekoppelte Anregungssignal mit dem Raman-Streulicht zusammen an der Position des zweiten Gitterkopplers 12b reflektiert wird und den Pfad P wieder zum ersten Gitterkoppler 12a zurückläuft. Mit anderen Worten, der zweiten Gitterkoppler 12b entfällt und die Einkoppelposition I und die Auskoppelposition II fallen zu einer kombinierten Ein- und Auskoppelposition zusammen. Ein zusätzliches, optisches Weichenelement erlaubt es, das zurücklaufende Anregungssignal von dem eingekoppelten Anregungssignal zu trennen, um es auszuwerten. So kann die nutzbare Länge des Anregungswellenleiters verdoppelt werden.

Des Weiteren kann vorgesehen sein, dass nur das zurücklaufende Raman-Streulicht an der Position des ersten Gitterkopplers 12a ausgekoppelt wird. Mit anderen Worten, es wird nur das Raman-Streulicht ausgekoppelt, dass in entgegengesetzter Richtung zu dem Anregungssignal durch den Anregungswellenleiter 8 propagiert.

Ferner kann abweichend vom vorliegenden Ausführungsbeispiel auch vorgesehen sein, den Anregungswellenleiter 8 als Ringresonator mit einer Einkoppelposition I und einer Auskoppelposition II auszubilden, wobei das Anregungssignal dann bis zu seiner vollständigen Abschwächung in dem Ringresonator zirkuliert. So kann die nutzbare Länge des Anregungswellenleiters nochmals vergrößert werden. Auch hier kann in Richtung des Anregungssignals laufendes Raman-Streulicht und/oder zurücklaufendes Raman-Streulicht ausgekoppelt und ausgewertet werden.

Im vorliegenden Ausführungsbeispiel weisen der Probeaufnahmeraum 6 und der Anregungssignalwellenleiter 8 jeweils eine quaderförmige Grundform mit einer Haupterstreckungsachse in Richtung des Pfades P auf. Dabei befindet sich im vorliegenden Ausführungsbeispiel der Probeaufnahmeraum 6 in der Gebrauchsposition in Schwerkraftrichtung oberhalb und/oder seitlich des Anregungssignalwellenleiters 8. Zum Reinigen hingegen kann der Probenaufnahmeraum 6 durch Drehen um 180° in eine Reinigungsposition gebracht werden, in der der Probeaufnahmeraum 6 dann unterhalb und/oder seitlich des Anregungssignalwellenleiters 8 befindet.

Im vorliegenden Ausführungsbeispiel weist der Anregungssignalwellenleiter 8 einen Anregungswellenleiterkern aus Siliziumnitrid auf einem Trägermaterial, wie z.B. Siliziumdioxid 22, auf. Abweichend vom vorliegenden Ausführungsbeispiel kann der Anregungswellenleiterkern aus einem High-k-Dielektrikum bestehen. Unter einem High-k-Dielektrikum wird dabei ein Material verstanden, das eine höhere Dielektrizitätszahl εᵣ als Siliziumdioxid oder Siliziumnitrid hat. Z.B. kann das High-k-Dielektrikum Aluminiumoxid und/oder Tantaloxid und/oder andere amorphe Oxide von Metallen und/oder Titanoxid und/oder Aluminiumnitrid sein. Ferner kann der Anregungssignalwellenleiter 8 auch aus Indiumzinnoxid gebildet sein und zusätzlich auch die Spiegel-Elektroden 10a, 10b zum Beaufschlagen der Probe mit einem elektrischen Feld aufweisen. Mit anderen Worten, der Anregungswellenleiter 8 und die Spiegel-Elektroden 10a, 10b bilden ein Bauteil bzw. eine Komponente.

Ferner sind im vorliegenden Ausführungsbeispiel der erste Gitterkoppler 12a und der zweite Gitterkoppler 12b aus dem gleichen Material des Kerns des Anregungssignalwellenleiters 8 gebildet. Der Anregungssignalwellenleiter 8 kann mit einem Resonator versehen sein. Die entstehenden Raman-Signalanteile, welche sich entgegengesetzt zum Anregungssignal ausbreiten, können zudem eingangsseitig abgegriffen werden.

Rechts und links von dem Probeaufnahmeraum 6 sind im vorliegenden Ausführungsbeispiel die Spiegel-Elektroden 10a, 10b angeordnet. Die Spiegel-Elektroden 10a, 10b weisen auch jeweils eine quaderförmige Grundform mit einer Haupterstreckungsachse in Richtung des Pfades P auf. Feldlinien eines mit den Spiegel-Elektroden 10a, 10b erzeugten elektrischen Feldes sind im vorliegenden Ausführungsbeispiel im Wesentlichen rechtwinklig zur Richtung des Pfades P.

Die Spiegel-Elektroden 10a, 10b bestehen im vorliegenden Ausführungsbeispiel aus einem metallischen Material, wie z.B. Aluminium, auf einem elektrisch isolierenden Trägermaterial, wie z.B. dem Siliziumdioxid 22. Alternativ können die Spiegel-Elektroden 10a, 10b durch hochdotiertes Silizium gebildet sein.

Das Siliziumdioxid 22 kann eine Dicke im Bereich von z.B. 300 nm bis 4 µm aufweisen. Im vorliegenden Ausführungsbeispiel weist das Siliziumdioxid 22 eine Dicke von 1 µm auf.

Die beiden Spiegel-Elektroden 10a, 10b können einen Abstand aufweisen, der im Bereich von z.B. 100 nm bis 10 µm liegt. Im vorliegenden Ausführungsbeispiel beträgt der Abstand 2 µm.

Ferner können die beiden Spiegel-Elektroden 10a, 10b eine Höhe aufweisen, die im Bereich von 100 nm bis 3 µm liegt. Im vorliegenden Ausführungsbeispiel beträgt die Höhe 500 nm.

Des Weiteren können die beiden Spiegel-Elektroden 10a, 10b eine Breite aufweisen, die im Bereich von 100 nm bis 10 µm liegt. Im vorliegenden Ausführungsbeispiel beträgt die Breite 3 µm.

Der Anregungswellenleiter 8 kann eine Länge in Richtung des Pfades P aufweisen, die z.B. im Bereich von 0,1 cm bis 5 cm liegt. Im vorliegenden Ausführungsbeispiel beträgt die Länge 1,45 cm.

Ferner kann der Anregungswellenleiter 8 eine Höhe aufweisen, die z.B. im Bereich von 50 nm bis 750 nm liegt. Im vorliegenden Ausführungsbeispiel beträgt die Höhe 200 nm oder 220 nm. Der Anregungswellenleiter 8 kann als Rippenwellenleiter ausgebildet sein. D.h., zu einem mittleren Spalt des Anregungswellenleiters 8 hin weist der Anregungswellenleiter 8 je zwei Abschnitte mit einer vergrößerten Höhe im Vergleich zu anderen Abschnitten des Anregungswellenleiters 8 auf.

Des Weiteren kann der Anregungslichtwellenleiter 8 eine Breite aufweisen, die z.B. im Bereich von 50 nm bis 10 µm liegt. Im vorliegenden Ausführungsbeispiel beträgt die Breite 100 nm oder 150 nm.

Ferner kann der Lichtwellenleiter 8 eine Spaltbreite aufweisen, die z.B. im Bereich von 50 nm bis 500 nm liegt. Im vorliegenden Ausführungsbeispiel beträgt die Höhe 200 nm.

Unterhalb des Anregungssignalwellenleiters 8 und unterhalb des Siliziumdioxids 22 befindet sich im vorliegenden Ausführungsbeispiel in der Gebrauchsposition in Schwerkraftrichtung das Spiegelelement 16a.

Abweichend oder zusätzlich kann das Spiegelelement 16a in der Gebrauchsposition in Schwerkraftrichtung auch oberhalb des Probeaufnahmeraums 6 angeordnet sein, wie dies später noch detailliert erläutert wird.

Das Spiegelelement 16a kann aus einem metallischen Material, wie z.B. Aluminium, bestehen und ist z.B. als Rückseitenmetallisierung ausgebildet, wenn sich das Spiegelelement 16a unterhalb des Anregungssignalwellenleiters 8 und unterhalb des Siliziumdioxids 22 befindet. Alternativ kann das Spiegelelement 16a auch aus einem Halbleiter-Material gefertigt sein. Z.B. kann es als Bragg-Spiegel ausgebildet sein, wie dies später noch detailliert erläutert wird. Hierzu kann das Spiegelelement 16a mehrere Schichten von Siliziumnitrid und Siliziumdioxid aufweisen, die in einer alternierenden Reihenfolge aufeinander gestapelt sind.

In beiden Fällen kann das Spiegelelement 16a als dritte Spiegel-Elektrode 10c (nicht in Figur 1 dargestellt) und/oder vierte Spiegel-Elektrode 10d (ebenfalls nicht in Figur 1 dargestellt) verwendet werden, sofern das Spiegelelement 16a aus einem metallischen Material gefertigt ist.

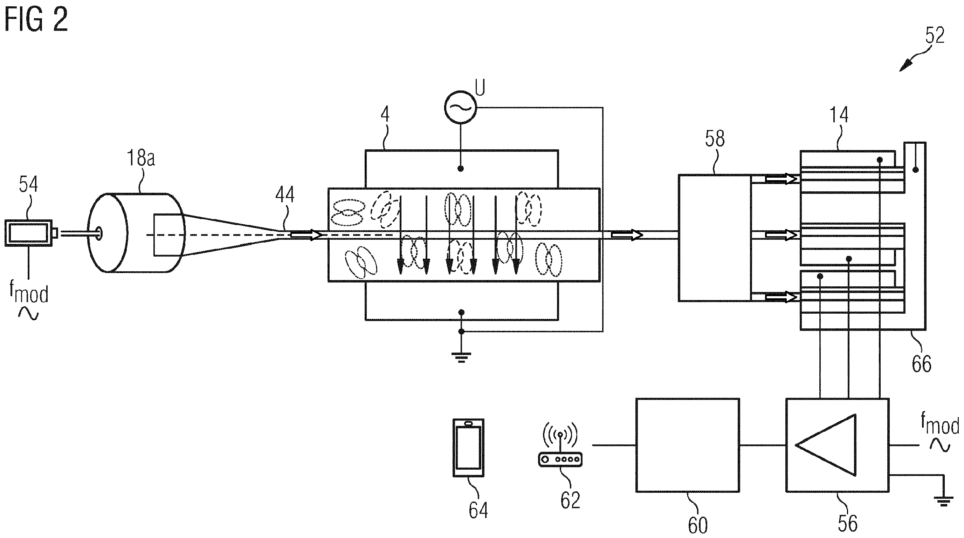

Es wird nun zusätzlich auf Figur 2 Bezug genommen.

Dargestellt sind Komponenten eines Systems 52 zur Raman-Spektroskopie mit der Sensoranordnung 4.

Im Betrieb wird von einer Lichtquelle 54, im vorliegenden Ausführungsbeispiel ein Laser, der ein moduliertes Laserlicht bereitstellt, oder ein Mehrfarben-Laser, der ein Anregungssignal bereitgestellt, das aus einem Lichtwellenleiter 18a austritt und über eine Freiluftstrecke an einer Einkoppelposition I über den ersten Gitterkoppler 12a in den Anregungssignalwellenleiter 8 eingekoppelt.

Fluoreszenz ist bei der Raman-Spektroskopie ein relevantes Störsignal, wobei eine Raman-Signal-Intensität relativ schnell im Vergleich zur Fluoreszenz auf Leistungsschwankungen des Anregungssignals reagiert. Daher ist im vorliegenden Ausführungsbeispiel vorgesehen, eine Eingangsintensität des Anregungssignals mit einer Frequenz f_{mod} zu modulieren, die größer als eine Fluoreszenz-Frequenz f_{Fluor} ist: f_{mod} > f_{Fluor}. Die Raman- bzw. Raman-Streulicht-Anteile im Gesamt-Ausgangssignal können dann durch eine Demodulation mit der Frequenz f_{mod} extrahiert werden, z.B. mit einem Lock-in Verstärker 56.

Auf dem Weg entlang des Pfades P zum zweiten Gitterkoppler 12b wechselwirkt das evaneszente Feld des Anregungssignals im Anregungssignalwellenleiter 8 mit der Probe 2 und erzeugt durch die Ramanstreuung Lichtspektren, die wie beschrieben ausgewertet werden können.

An der Auskoppelposition II werden durch den zweiten Gitterkoppler 12b die durch Raman-Streuung hervorgerufenen Lichtspektren aus dem Anregungssignalwellenleiter 8 ausgekoppelt und koppeln über eine zweite Freiluftstrecke in einen zweiten Lichtwellenleiter 18b breitbandig ein, um einer weiteren Auswertung zugeführt zu werden, z.B. mittels eines nachgeschalteten Spektrometers (nicht dargestellt).

Wie später noch detailliert erläutert wird, kann abweichend vom vorliegenden Ausführungsbeispiel die Sensoranordnung 4 eine monolithisch integrierte Photodioden-Baugruppe 14 (nicht in Figur 1 dargestellt) aufweisen, die die Lichtspektren in ein elektrisches Ausgangssignal umwandelt. Hierzu kann die Photodioden-Baugruppe 14 z.B. ein Array aus signalverstärkenden Lawinen-Photodioden aufweisen.

Das durch eingekoppeltes Anregungssignal hervorgerufene Raman-Streulicht wird auf seinem Weg entlang des Pfades P von dem ersten Gitterkoppler 12a zu dem zweiten Gitterkoppler 12b von dem Spiegelelement 16a wieder in den Anregungssignalwellenleiter 8 zurückreflektiert, wenn das Raman-Streulicht aus dem Anregungssignalwellenleiter 8 austritt. Hierzu ist das Spiegelelement 16a derart ausgebildet, dass reflektierte Signalanteile in den Anregungswellenleiter 8 gebeugt werden. Eine Effizienzsteigerung von mehr als 40% kann so erreicht werden.

Ferner wird im vorliegenden Ausführungsbeispiel das Raman-Streulicht auf seinem Weg entlang des Pfades P von dem ersten Gitterkoppler 12a zu dem zweiten Gitterkoppler 12b von den beiden Spiegel-Elektroden 10a, 10b wieder in den Anregungssignalwellenleiter 8 zurückreflektiert, wenn das eingekoppelte Anregungssignal aus dem Anregungssignalwellenleiter 8 austritt.

Des Weiteren werden im Betrieb die Spiegel-Elektroden 10a, 10b mit einer elektrischen gleichspannungsfreien Wechselspannung U beaufschlagt, um ein elektrisches Feld zwischen den beiden Spiegel-Elektroden 10a, 10b bereitzustellen, dessen elektrische Feldlinien im vorliegenden Ausführungsbeispiel im Wesentlichen einen Winkel von 90° zu der Haupterstreckungsachse entlang des Pfades P aufweisen. Dabei wird unter im Wesentlichen innerhalb üblicher Fertigungstoleranzen verstanden. Die elektrische Feldstärke kann im vorliegenden Ausführungsbeispiel bis zu 200 V/µm betragen.

Aufgrund des elektrischen Feldes des Anregungssignals werden Moleküle 20 angeregt. Die angeregten Schwingungsmodi der Moleküle 20 führen zur Emission von Photonen geringerer oder höherer Energie. Koppeln sie wieder in die wellenleitergeführte Modi ein (dieser Prozess wird ebenfalls durch das Spiegelelement 16a effizienter), treten Signale im Raman-Streulichtspektrum hervor, deren Wellenlängen sich von der Wellenlänge des Anregungssignals unterscheiden. Diese induzierten Wellenlängen enthalten einen charakteristischen "Fingerabdruck" der Probe 2.

Die Moleküle 20 lassen sich in erster Näherung als Hertzsche Dipole auffassen. Wie in einer Dipol-Antenne werden nur elektrische Felder empfangen bzw. abgestrahlt, die parallel zum elektrischen Dipolmoment stehen. Somit werden die Schwingungsmodi der Moleküle 20, abhängig von deren Ausrichtung zum elektrischen Feld des Anregungssignals, stärker oder weniger stark angeregt.

Das elektrische Feld ist dabei ausreichend stark, sodass die Dipole der Moleküle 20 entlang des elektrischen Feldes ausgerichtet werden. Durch die erzwungene Ausrichtung erhöht sich sowohl die Wahrscheinlichkeit der Anregung der Schwingungsmodi als auch die Kopplung der emittierten Raman-Photonen in die geführten Modi des Anregungswellenleiters 8. Dies führt zu einer deutlichen Verstärkung des Ausgangssignals.

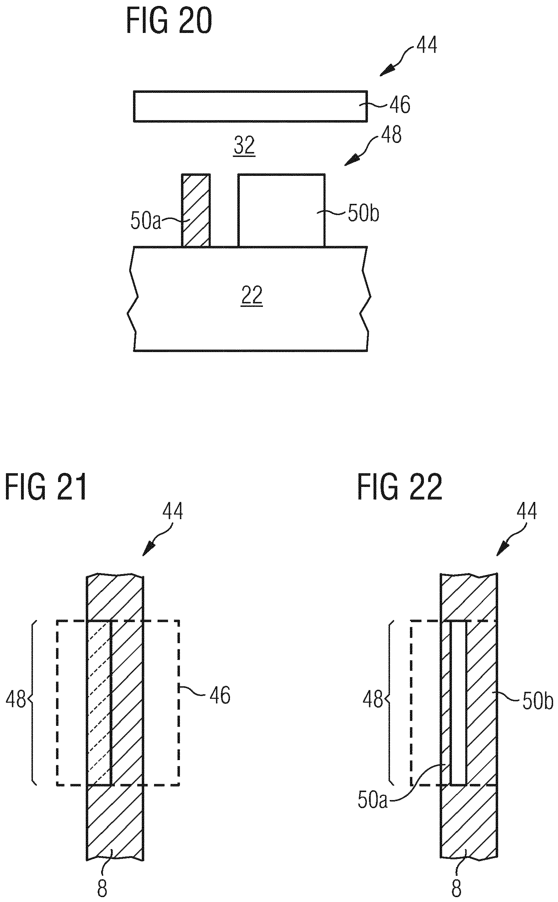

Zusätzlich kann die Polarisation im Anregungswellenleiter 8 ohne angelegte elektrische Wechselspannung variiert werden, um die Ausrichtung der Moleküle 20 über dem Anregungswellenleiter 8 zu untersuchen. Hierzu kann ein monolithisch integrierter abstimmbarer Polarisationsrotator 44 vorgesehen sein, der später detailliert anhand der Figuren 20 bis 23 erläutert wird.

Die Photodioden-Baugruppe 14, z.B. in Form eines Photodioden-Arrays mit einer Bandbreite B größer als die Frequenz f_{mod}, ist im vorliegenden Ausführungsbeispiel vorgesehen, um die Lichtspektren in ein elektrisches Ausgangssignal umzuwandeln. Dabei ist im vorliegenden Ausführungsbeispiel der Photodioden-Baugruppe 14 eine Filter- und spektrale Zerlegungseinrichtung 58 vorgeschaltet. Der Photodioden-Baugruppe 14 kann an der Rückseite ein Spiegel 66 zugeordnet sein, der Licht wieder in die Photodioden-Baugruppe 14 zurückreflektiert.

Ferner weist das System 52 eine dem Lock-in Verstärker 56 nachgeschaltete Datenverarbeitungseinrichtung 60, z.B. mit einem digitalen Signal-Prozessor, auf, der über eine Schnittstelle 62 zur z.B. drahtlosen Datenübertragung zu einem Mobilgerät 64, wie z.B. einem Smartphone, ausgebildet ist. Das Mobilgerät 64 kann programmtechnisch zur Auswertung der Spektren des Ausgangssignals ausgebildet sein.

Abweichend vom vorliegenden Ausführungsbeispiel können weitere Komponenten des Systems 52 zusammen mit den Komponenten der Sensoranordnung 4 auf einem Chip monolithisch integriert sein, wie z.B. die Photodioden-Baugruppe 14 und/oder der Lock-in Verstärker 56 und/oder die Filter- und spektrale Zerlegungseinrichtung 58 und/oder die Datenverarbeitungseinrichtung 60 und/oder die Schnittstelle 62. Mit anderen Worten, das System 52 kann auch als MEMS-System ausgebildet sein.

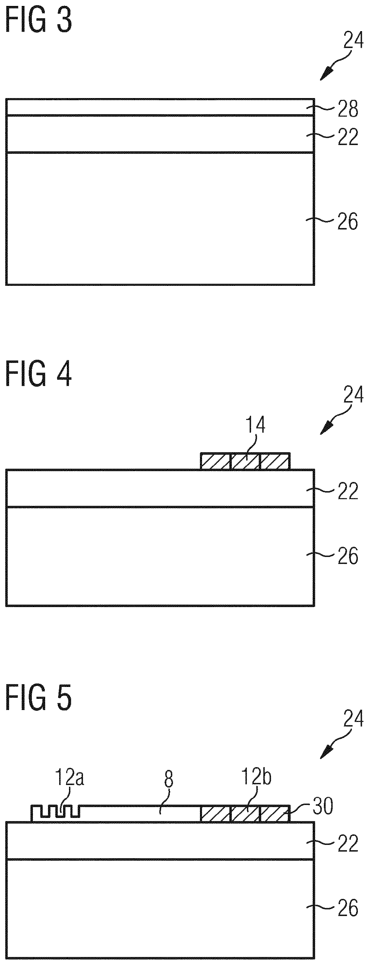

Es wird nun unter zusätzlicher Bezugnahme auf die Figuren 3 bis 9 ein Herstellungsverfahren zur Herstellung der als MEMS-Sensoranordnung ausgebildeten Sensoranordnung 4 zur Raman-Spektroskopie erläutert.

Das Herstellungsverfahren startet im vorliegenden Ausführungsbeispiel mit einem SOI-Wafer als Substrat 24 (siehe Figur 3). Der SOI-Wafer weist im vorliegenden Ausführungsbeispiel ein Silizium-Substrat 26, die Siliziumdioxidschicht 22 und eine weitere Silizium-Schicht 28 auf.

In einem ersten Herstellungsschritt wird die Siliziumschicht 28 auf dem Substrat 24 strukturiert, z.B. durch einen Trockenätzprozess, und dotiert, z.B. durch Ionenimplantation, um die Photodioden-Baugruppe 14 zu bilden (siehe Figur 4).

In einem weiteren Herstellungsschritt erfolgt eine Abscheidung von Siliziumnitrid 30, z.B. mittels eines LPCVD-Prozesses, gefolgt von einer Strukturierung des Siliziumnitrids 30, z.B. durch einen Trockenätzprozess, um den Anregungssignalwellenleiter 8 sowie den ersten Gitterkoppler 12a und den zweiten Gitterkoppler 12b zu bilden (siehe Figur 4).

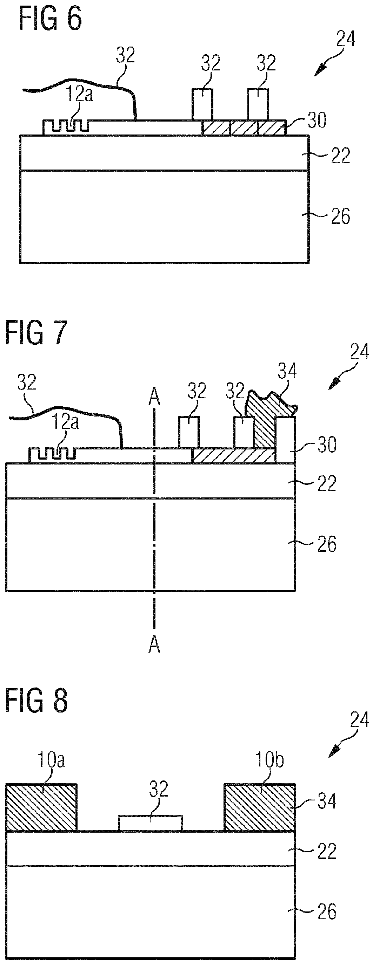

In einem weiteren Herstellungsschritt erfolgt eine Abscheidung von Siliziumdioxid 32, z.B. mittels eines LPCVD-Prozesses, gefolgt von einer Strukturierung des Siliziumdioxids 32, z.B. durch einen Trockenätzprozess, um Negativformen für die beiden Spiegel-Elektroden 10a, 10b zu bilden (siehe Figur 6).

In einem weiteren Herstellungsschritt erfolgt eine Abscheidung von einem Metall 34, wie z.B. Aluminium, gefolgt von einem Entfernen des Siliziumdioxid 32, z.B. mittels eines nasschemischen Ätzprozesses, um die beiden Spiegel-Elektroden 10a, 10b fertig zu stellen (siehe Figuren 7 und 8).

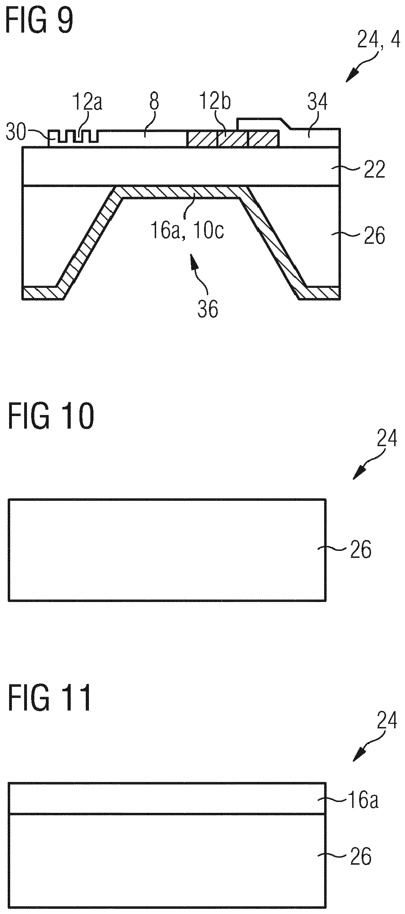

In einem weiteren Herstellungsschritt wird, um die Sensoranordnung 4 fertig zu stellen, in die Rückseite des Silizium-Substrats 26 mittels anisotropen Ätzens, z.B. mittels eines reaktiven lonenätzprozesses (RIE), oder mittels eines nasschemischen Ätzprozesses, z.B. mit Kaliumhydroxid, eine Kavität 36 eingebracht, die anschließend mit einem Metall, wie z.B. Aluminium, beschichtet wird, um das Spiegelelement 16a zu bilden, die auch als weitere Elektrode 10c geschaltet werden kann (siehe Figur 9).

Abweichend vom vorliegenden Ausführungsbeispiel kann die Reihenfolge der Herstellungsschritte auch eine andere sein. Ferner können mehrere Herstellungsschritte auch zeitgleich bzw. simultan ausgeführt werden. Des Weiteren können auch abweichend vom vorliegenden Ausführungsbeispiel einzelne Herstellungsschritte übersprungen oder ausgelassen werden.

Es wird nun unter zusätzlicher Bezugnahme auf die Figuren 10 bis 18 ein weiteres Herstellungsverfahren zur Herstellung der als MEMS-Sensoranordnung ausgebildeten Sensoranordnung 4 zur Raman-Spektroskopie erläutert.

Das Herstellungsverfahren startet im vorliegenden Ausführungsbeispiel mit einem Silizium-Wafer als Substrat 24 mit einem Silizium-Substrat 26 oder einem Wafer aus einem anderen Material (siehe Figur 10).

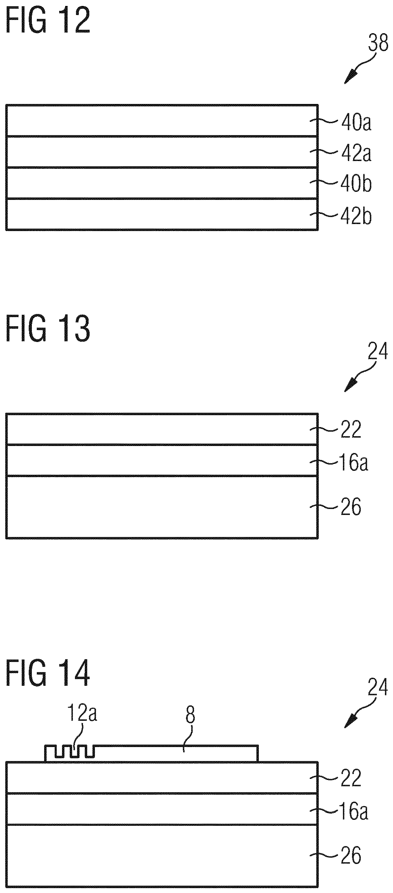

In einem ersten Herstellungsschritt wird das Spiegelelement 16a auf dem Substrat 24 gebildet. Dies kann durch eine Abscheidung von Metall, z.B. Aluminium, (siehe Figur 11) oder auch durch Bilden eines Bragg-Spiegels 38 mit mehreren Schichten von Siliziumnitrid 40a, 40b und Siliziumdioxid 42a, 42b erfolgen (siehe Figur 12).

In einem weiteren Herstellungsschritt erfolgt eine Abscheidung von Siliziumdioxid 22 (siehe Figur 13). Wenn das Spiegelelement 16a durch eine Abscheidung von Aluminium gebildet wurde, kann das Siliziumdioxid 22 mittels eines PECVD-Prozesses abgeschieden werden, während das Siliziumdioxid 22 mittels eines LPCVD-Prozesses abgeschieden werden kann, wenn das Spiegelelement 16a ein Bragg-Spiegel 38 ist.

In einem weiteren Herstellungsschritt erfolgt eine Abscheidung und Strukturierung von Siliziumnitrid 30 (siehe Figur 14). Wenn das Spiegelelement 16a durch eine Abscheidung von Aluminium gebildet wurde, kann das Siliziumnitrid 30 mittels eines PECVD-Prozesses abgeschieden werden, während das Siliziumnitrid 30 mittels eines LPCVD-Prozesses abgeschieden werden kann, wenn das Spiegelelement 16a ein Bragg-Spiegel 38 ist. Ferner erfolgt eine Strukturierung des Siliziumnitrids 30, um z.B. die Gitterkoppler 12a, 12b und den Anregungssignalwellenleiter 8 zu bilden.

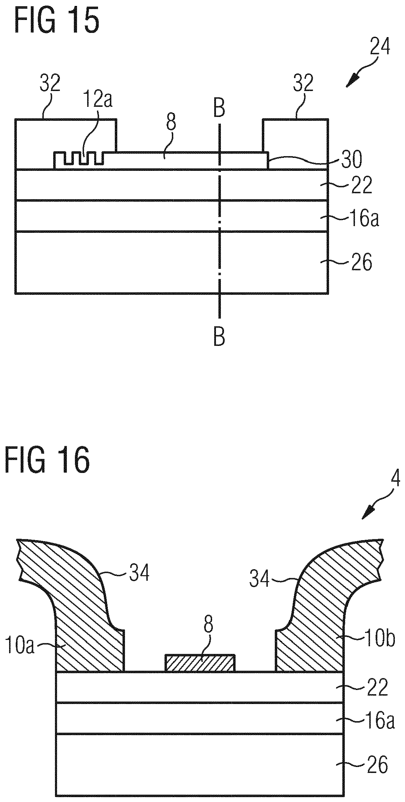

In einem weiteren Herstellungsschritt erfolgt eine Abscheidung und Strukturierung von Siliziumdioxid 32 (siehe Figur 15). Wenn das Spiegelelement 16a durch eine Abscheidung von Aluminium gebildet wurde, kann das Siliziumdioxid 32 mittels eines PECVD-Prozesses abgeschieden werden, während das Siliziumdioxid 32 mittels eines LPCVD-Prozesses abgeschieden werden kann, wenn das Spiegelelement 16a ein Bragg-Spiegel 38 ist. Ferner erfolgt eine Strukturierung des Siliziumdioxids 32.

In einem weiteren Herstellungsschritt erfolgt eine Abscheidung von einem Metall 34, wie z.B. Aluminium, gefolgt von einem Entfernen des Siliziumdioxids 32, z.B. mittels eines nasschemischen Ätzprozesses, um die beiden Spiegel-Elektroden 10a, 10b fertig zu stellen (siehe Figur 16).

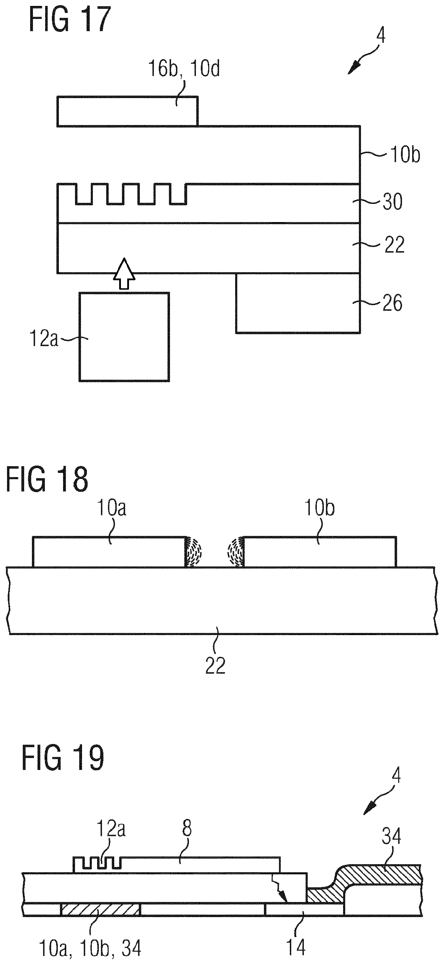

Zusätzlich kann vorgesehen sein, dass ein Teil des zuletzt abgeschiedenen Metalls 34 derart strukturiert wird, dass es ein obenseitiges Spiegelelement 16b bildet. Mit anderen Worten, es sind zwei Spiegelelemente 16a, 16b vorgesehen (siehe Figur 17).

Abweichend vom vorliegenden Herstellungsverfahren kann auch vorgesehen sein, dass auf die Abscheidung des Spiegelelements 16a im ersten Herstellungsschritt verzichtet wird und lediglich ein obenseitiges Spiegelelement 16b vorgesehen ist. In diesem Fall kann auch vorgesehen sein, dass in einem weiteren Herstellungsschritt in die Rückseite des Substrats 24 mittels anisotropen Ätzens, z.B. mittels eines reaktiven lonenätzprozesses, oder mittels eines nasschemischen Ätzprozesses, z.B. mit Kaliumhydroxid, die Kavität 36 eingebracht wird. Eine Einkopplung des Anregungssignals kann dann von der Rückseite aus erfolgen, d.h. das Ende des ersten Lichtwellenleiters 18a endet in der Kavität 36, und das Anregungssignal wird durch das Siliziumdioxid 22 zu dem ersten Gitterkoppler 12a geführt. Ferner kann auch das obenseitige Spiegelelement 16b als weitere Elektrode 10d geschaltet werden.

Es wird nun zusätzlich auf Figur 18 Bezug genommen.

Ferner kann abweichend vom vorliegenden Ausführungsbeispiel der Anregungswellenleiter 8 ohne einen Anregungswellenleiterkern ausgebildet sein. Mit anderen Worten, der Anregungswellenleiter 8 ist kernfrei, d.h. anregungswellenleiterkernfrei ausgebildet. Somit wird dann das Anregungssignal z.B. plasmonisch geführt.

Es wird nun zusätzlich auf Figur 19 Bezug genommen.

Des Weiteren kann abweichend vom vorliegenden Ausführungsbeispiel vorgesehen sein, die vorliegenden Herstellungsverfahren zusätzlich um die Bildung der Photodioden-Baugruppe 14 zu ergänzen.

Dabei kann die Photodioden-Baugruppe 14, insbesondere mit breitbandigen Photodioden, vor der Herstellung der anderen Komponenten der Sensoranordnung 4 gebildet werden. Eine Abscheidung eines Materials eines Kerns für den Anregungswellenleiter 8 kann nachfolgend mit Niedertemperaturprozessen erfolgen, wie z.B. PECVD-Prozessen.

Ferner kann vorgesehen sein, dass ein Metall 34 einer Abscheidung zur elektrischen Kontaktierung der Photodioden-Baugruppe 14 und zum Bilden der Spiegel-Elektroden 10a, 10b verwendet wird. So kann die Anzahl der Metallabscheidungen reduziert werden.

Die Lichtkopplung zwischen dem Anregungswellenleiter 8 kann mittels Stoßkopplung, evaneszent, oder mittels des zweiten Gitterkopplers 12b (nicht dargestellt) erfolgen.

Es wird nun zusätzlich auf die Figuren 20 bis 23 Bezug genommen.

Zusätzlich kann vorgesehen sein, die Polarisation im Anregungswellenleiter 8 ohne angelegte elektrische Wechselspannung U zu variieren, um die Ausrichtung der Moleküle 20 über dem Anregungswellenleiter 8 zu untersuchen. Hierzu kann z.B. der monolithisch integrierte abstimmbarer Polarisationsrotator 44 vorgesehen sein.

Der Rotationspolarisator 44 kann als thermischer Phasenschieber mit einem Heizelement ausgebildet sein. Das Heizelement kann ein elektrischer Leiter, z.B. Metall 34, sein.

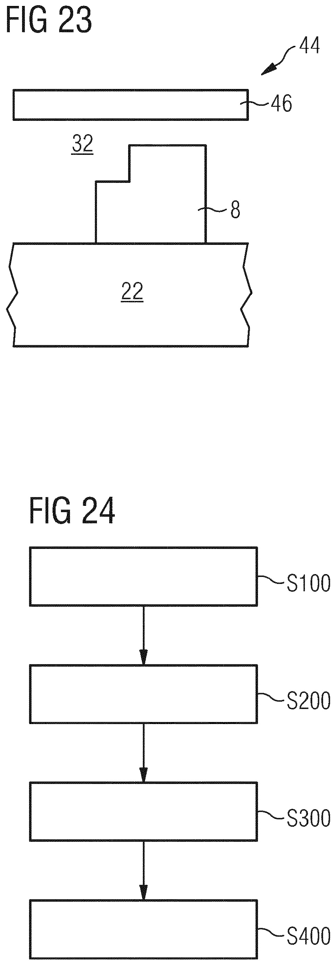

Im vorliegenden Ausführungsbeispiel weist der Polarisationsrotator 44 einen Wellenleiterabschnitt mit einem asymmetrischen Wellenleiterquerschnitt (siehe Figur 20 oder Figur 23) auf, der in den Anregungswellenleiter 8 (siehe Figur 21 oder Figur 22) eingelassen ist. Das Anregungssignal wird mittels Stoßkopplung in den asymmetrischen Anregungswellenleiterabschnitt 48 gekoppelt. Es werden dadurch zwei Lichtmodi mit unterschiedlichen Brechungsindices angeregt, die den asymmetrischen Anregungswellenleiterabschnitt 48 durchlaufen und anschließend wieder in den Anregungswellenleiter 8 eingekoppelt werden. Die sich ergebende Polarisation des Anregungssignals nach dem Polarisationsrotator 44 hängt dann von der Phasendifferenz der beiden Lichtmodi im asymmetrischen Anregungswellenleiterabschnitt 48 ab. Diese kann über ein Heizelement 46 beeinflusst werden.

Abweichend vom vorliegenden Ausführungsbeispiel kann die Reihenfolge der Herstellungsschritte auch eine andere sein. Ferner können mehrere Herstellungsschritte auch zeitgleich bzw. simultan ausgeführt werden. Des Weiteren können auch abweichend vom vorliegenden Ausführungsbeispiel einzelne Herstellungsschritte übersprungen oder ausgelassen werden.

Des Weiteren können einzelne oder auch Gruppen von Herstellungsschritten der anhand der Figuren 3 bis 9 und der Figuren 10 bis 18 sowie der Figuren 19 bis 23 erläuterten Herstellungsverfahren zur Herstellung der als MEMS-Sensoranordnung ausgebildeten Sensoranordnung 4 zur Raman-Spektroskopie miteinander kombiniert werden.

Es wird nun unter zusätzlicher Bezugnahme auf die Figur 24 ein Verfahrensablauf zum Betrieb der Sensoranordnung 4 zur Raman-Spektroskopie erläutert.

In einem ersten Schritt S100 wird die Probe 2 in den Probenaufnahmeraum 6 der Sensoranordnung 4 eingebracht.

In einem weiteren Schritt S200 wird die Probe 2 mit einem elektrischen Feld zur Ausrichtung von Dipolen der Moleküle 20 der Probe 2 beaufschlagt. Hierzu kann eine beliebige Zweier- oder Dreierkombination der Spiegel-Elektroden 10a, 10b, 10c, 10d oder alle Spiegel-Elektroden 10a, 10b, 10c, 10d verwendet werden.

Dabei wird das elektrische Feld mit einer im Wesentlichen gleichspannungsfreien elektrischen Wechselspannung U erzeugt.

In einem weiteren Schritt S300 wird das Anregungssignal an der Einkoppelposition I in den Anregungswellenleiterkern 8 eingekoppelt, wobei das durch das eingekoppelte Anregungssignal hervorgerufene Raman-Streulicht auf seinem Pfad P entlang des Anregungssignalwellenleiters 8 zu einer Auskoppelposition II an den Spiegel-Elektroden 10a, 10b, 10c, 10d reflektiert wird.

Hierzu wird ein Anregungssignalwellenleiter 8 aus einem High-k-Dielektrikum verwendet, und zum Einkoppeln an der Einkoppelposition I wird der erste Gitterkoppler 12a und/oder zum Auskoppeln an der Auskoppelposition II wird der zweite Gitterkoppler 12b verwendet.

Das Spiegelelement 16a, 16b wirkt dabei mit dem Anregungssignalwellenleiter 8 zusammen, um das Raman-Streulicht auf seinem Pfad P zu der Auskoppelposition II zu reflektieren.

Ferner werden auch das Spiegelelement 16a, 16b als Spiegel-Elektroden 10c, 10d verwendet, d.h. sie werden wie die beiden Spiegel-Elektroden 10a, 10b mit einer im Wesentlichen gleichspannungsfreien elektrischen Wechselspannung U beaufschlagt, sodass eine beliebige Zweier- oder Dreierkombination der Spiegel-Elektroden 10a, 10b, 10c, 10d oder alle Spiegel-Elektroden 10a, 10b, 10c, 10d zusammen ein elektrisches Feld zur Ausrichtung von Dipolen der Moleküle 20 der Probe 2 bereitstellen. Des Weiteren kann eine beliebige Dreierkombination der Spiegel-Elektroden 10a, 10b, 10c, 10d oder alle Spiegel-Elektroden 10a, 10b, 10c, 10d derart mit einer im Wesentlichen gleichspannungsfreien elektrischen Wechselspannung U beaufschlagt werden, dass sie zusammenwirkend ein elektrisches Drehfeld zur Ausrichtung der Dipole der Moleküle 20 der Probe 2 bereitstellen.

In einem weiteren Schritt S400 wird das Raman-Streulicht als Ausgangssignal an der Auskoppelposition II ausgekoppelt.

Das ausgekoppelte Ausgangssignal wird dann mit der Photodioden-Baugruppe 14 der Sensoranordnung 4 erfasst.

Abweichend vom vorliegenden Ausführungsbeispiel kann die Reihenfolge der Schritte auch eine andere sein. Ferner können mehrere Schritte auch zeitgleich bzw. simultan ausgeführt werden. Des Weiteren können auch abweichend vom vorliegenden Ausführungsbeispiel einzelne Schritte übersprungen oder ausgelassen werden.

Somit wird ein verbessertes Verfahren zur Durchführung einer Raman-Spektroskopie bereitgestellt, und insbesondere die MEMS-Sensoranordnung kann nach ihrem bestimmungsgemäßen Gebrauch problemlos mit Druckluft gereinigt werden.

### Bezugszeichenliste

- 2: Probe
- 4: Sensoranordnung
- 6: Probeaufnahmeraum
- 8: Anregungssignalwellenleiter
- 10a: Spiegel-Elektrode
- 10b: Spiegel-Elektrode
- 10c: Spiegel-Elektrode
- 10d: Spiegel-Elektrode
- 12a: Gitterkoppler
- 12b: Gitterkoppler
- 14: Photodioden-Baugruppe
- 16a: Spiegelelement
- 16b: Spiegelelement
- 18a: Lichtwellenleiter
- 18b: Lichtwellenleiter
- 20: Moleküle
- 22: Siliziumdioxid
- 24: Substrat
- 26: Silizium-Substrat
- 28: Silizium-Schicht
- 30: Siliziumnitrid
- 32: Siliziumdioxid
- 34: Metall
- 36: Kavität
- 38: Bragg-Spiegel
- 40a: Siliziumnitrid
- 40b: Siliziumnitrid
- 42a: Siliziumdioxid
- 42b: Siliziumdioxid
- 44: Polarisationsrotator
- 46: Heizelement
- 48: asymmetrischer Anregungswellenleiterabschnitt
- 50a: Abschnitt
- 50b: Abschnitt
- 52: System
- 54: Lichtquelle
- 56: Lock-in Verstärker
- 58: Filter- und spektrale Zerlegungseinrichtung
- 60: Datenverarbeitungseinrichtung
- 62: Schnittstelle
- 64: Mobilgerät
- 66: Spiegel

- f_{Fluor}: Fluoreszenz-Frequenz
- f_{mod}: Frequenz
- P: Pfad
- U: gleichspannungsfreie elektrische Wechselspannung

- I: Einkoppelposition
- II: Auskoppelposition

- S100: Schritt
- S200: Schritt
- S300: Schritt
- S400: Schritt

## Patentansprüche

1. Verfahren zur Durchführung einer Raman-Spektroskopie, mit einer Sensoranordnung (4) zur Raman-Spektroskopie, insbesondere mit einer MEMS-Sensoranordnung zur Raman-Spektroskopie, wobei die Sensoranordnung (4) zur Raman-Spektroskopie einen Probeaufnahmeraum (6) zum Aufnehmen einer zu untersuchenden Probe (2), einen zumindest abschnittsweise an den Probeaufnahmeraum (6) angrenzenden Anregungssignalwellenleiter (8) zum Beaufschlagen der Probe (2) mit einem Anregungssignal, und zumindest zwei Spiegel-Elektroden (10a, 10b, 10c, 10d), aufweist, mit den Schritten:
(S100) Einbringen der Probe (2) in den Probeaufnahmeraum (6),
(S300) Einkoppeln von einem Anregungssignal an einer Einkoppelposition (I) in den Anregungswellenleiter (8), wobei durch das eingekoppelte Anregungssignal hervorgerufene Raman-Streulicht auf seinem Weg zu dem Anregungssignalwellenleiter (8) zu einer Auskoppelposition (II) an den Spiegel-Elektroden (10a, 10b, 10c, 10d) reflektiert und in den Anregungswellenleiter (8) wieder eingekoppelt wird, und
(S400) Auskoppeln des Raman-Streulichts an der Auskoppelposition (II).

2. Verfahren nach Anspruch 1, wobei in einem weiteren Schritt (S200) die Probe (2) mit einem elektrischen Feld zur Ausrichtung von Dipolen der Probe (2) beaufschlagt wird.

3. Verfahren nach Anspruch 2, wobei das elektrische Feld mit einer im Wesentlichen gleichspannungsfreien elektrischen Wechselspannung (U) erzeugt wird.

4. Verfahren nach Anspruch 1, 2 oder 3, wobei ein Anregungssignalwellenleiter (8) verwendet wird, der Siliziumnitrid und/oder ein high-k-Dielektrikum und/oder Indiumzinnoxid und/oder Lithiumniobat enthält.

5. Verfahren nach einem der Ansprüche 1 bis 4, wobei an der Einkoppelposition (I) ein Gitterkoppler (12a) zum Einkoppeln und/oder an der Auskoppelposition (II) ein Gitterkoppler (12b) zum Auskoppeln verwendet wird.

6. Verfahren nach einem der Ansprüche 1 bis 5, wobei an der Ausgangsposition (II) das Ausgangssignal mit einer Photodioden-Baugruppe (14) der Sensoranordnung (4) erfasst wird.

7. Verfahren nach einem der Ansprüche 1 bis 6, wobei ein Spiegelelement (16a, 16b) zusammenwirkend mit dem Anregungssignalwellenleiter (8) das Raman-Streulicht auf seinem Weg zu einer Auskoppelposition (II) reflektiert und/oder das Anregungssignal auf seinem Weg von einer Einkoppelposition (I) zum Anregungssignalwellenleiter (8) reflektiert.

8. Verfahren nach Anspruch 7, wobei das Spiegelelement (16a, 16b) als Spiegel-Elektrode (10c, 10d) verwendet wird.

9. Sensoranordnung (4) zur Raman-Spektroskopie, insbesondere MEMS-Sensoranordnung zur Raman-Spektroskopie, mit einem Probeaufnahmeraum (6) zur Aufnahme einer zu untersuchenden Probe (2), einen zumindest abschnittsweise an den Probeaufnahmeraum (6) angrenzenden Anregungssignalwellenleiter (8) zum Beaufschlagen der Probe (2) mit einem Anregungssignal, Spiegel-Elektroden wobei die Sensoranordnung (4) zum Einkoppeln eines Anregungssignals an einer Einkoppelposition (I) in den Anregungswellenleiter (8) ausgebildet ist, wobei zumindest zwei Spiegel-Elektroden (10a, 10b, 10c, 10d) derart ausgebildet sind, dass durch das eingekoppelte Anregungssignal hervorgerufenes Raman-Streulicht auf seinem Weg zu dem Anregungssignalwellenleiter (8) zu einer Auskoppelposition (II) an den Spiegel-Elektroden (10a, 10b, 10c, 10d) reflektiert und in den Anregungswellenleiter (8) wieder eingekoppelt wird, und wobei die Sensoranordnung (4) zum Auskoppeln des Raman-Streulichts an der Auskoppelposition (II) ausgebildet ist.

10. Sensoranordnung (4) nach Anspruch 9, wobei die Sensoranordnung (4) zumindest zwei Spiegel-Elektroden (10a, 10b, 10c, 10d) zum Beaufschlagen der Probe (2) mit einem elektrischen Feld aufweist.

11. Sensoranordnung (4) nach Anspruch 9 oder 10, wobei das elektrische Feld mit einer im Wesentlichen gleichspannungsfreien elektrischen Wechselspannung (U) erzeugbar ist.

12. Sensoranordnung (4) nach Anspruch 9, 10 oder 11, wobei der Anregungssignalwellenleiter (8) Siliziumnitrid und/oder ein high-k-Dielektrikum und/oder Indiumzinnoxid und/oder Lithiumniobat enthält.

13. Sensoranordnung (4) nach einem der Ansprüche 9 bis 12, wobei an der Einkoppelposition (I) ein Gitterkoppler (12a) zum Einkoppeln und/oder an der Auskoppelposition (II) ein Gitterkoppler (12b) zum Auskoppeln vorgesehen ist.

14. Sensoranordnung (4) nach einem der Ansprüche 9 bis 13, wobei an der Ausgangsposition (II) zum Erfassen des Ausgangssignals eine Photodioden-Baugruppe (14) vorgesehen ist.

15. Sensoranordnung (4) nach einem der Ansprüche 9 bis 14, wobei ein Spiegelelement (16a, 16b) vorgesehen ist, das zusammenwirkend mit dem Anregungssignalwellenleiter (8) das Raman-Streulicht auf seinem Weg zu einer Auskoppelposition (II) reflektiert und/oder das Anregungssignal auf seinem Weg von einer Einkoppelposition (I) zum Anregungssignalwellenleiter (8) reflektiert.

16. Sensoranordnung (4) nach Anspruch 15, wobei das Spiegelelement (16a, 16b) als Spiegel-Elektrode (10c, 10d) verwendbar ausgebildet ist.

17. System (52) zur Raman-Spektroskopie mit einer Sensoranordnung (4) nach einem der Ansprüche 9 bis 16.
